(19) Europäisches Patentamt / European Patent Office / Office européen des brevets

(11) **EP 3 297 331 A1**

(12) **EUROPEAN PATENT APPLICATION**
published in accordance with Art. 153(4) EPC

(43) Date of publication:
**21.03.2018 Bulletin 2018/12**

(51) Int Cl.:
*H04W 40/02* (2009.01)   *H04W 84/18* (2009.01)
*H04W 92/18* (2009.01)

(21) Application number: **15891871.4**

(22) Date of filing: **14.05.2015**

(86) International application number:
**PCT/JP2015/063883**

(87) International publication number:
**WO 2016/181547 (17.11.2016 Gazette 2016/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Fujitsu Limited
Kawasaki-shi, Kanagawa 211-8588 (JP)**

(72) Inventor: **CHEN, Hongyang
Kawasaki-shi
Kanagawa 211-8588 (JP)**

(74) Representative: **Haseltine Lake LLP
Lincoln House, 5th Floor
300 High Holborn
London WC1V 7JH (GB)**

(54) **WIRELESS COMMUNICATION SYSTEM**

(57)    A wireless communication system includes: a destination device; a source device configured to support D2D communication; and a plurality of terminal devices configured to respectively support D2D communication. The source device transmits a discovery signal to the plurality of terminal devices. Each terminal device calculates a priority value according to a received power of the discovery signal, a received power of a reference signal transmitted from the destination device, a residual amount of its own battery, a number of adjacent D2D nodes or interference received from the adjacent D2D nodes or any combination thereof. Each terminal device transmits the priority value to the source device. The source device selects a terminal device that will relay data to be transmitted from the source device to the destination device from among the plurality of terminal devices in accordance with the priority value received from one or more terminal devices.

FIG. 7

**Description**

<Technical Field>

The present invention is related to a wireless communication system that performs device-to-device (D2D) communication, and a wireless communication device used in the wireless communication system.

<Background Art>

The Third Generation Partnership Project (3GPP) has been considering the standardization of a mobile communication scheme. As an example, a high-speed wireless communication scheme such as long-term evolution (LTE) has been standardized by the 3GPP. In 3GPP Standards (Release 12), as one example of a new wireless communication scheme, the standardization of D2D communication is being promoted. D2D communication is one example of an extended specification of LTE, and may be referred to as LTE device-to-device proximity services.

In D2D communication, a terminal device can perform direct communication with another terminal device without going through a base station. Therefore, communication with a small delay is expected when D2D communication is used. In addition, D2D communication can be performed in an area that is difficult for radio waves from a base station to reach (or an area in which no base stations exist), and therefore D2D communication can contribute to the extension of network coverage. Further, also in a situation in which a base station is unavailable (for example, when a major earthquake has occurred), D2D communication can be performed, and therefore D2D communication can contribute to the securement of communications in disasters. A communication link established between terminal devices for D2D communication may be referred to as a D2D link.

When a terminal device fails to perform direct communication with a base station, D2D communication can be used such that another terminal device that supports D2D communication operates as a relay device between the terminal device and the base station. Namely, the network coverage is substantially extended by the UE-to-network relay. In addition, in D2D communication, data (such as emergency information) to be transmitted from a source terminal to a destination terminal can be relayed without going through a base station. Stated another way, D2D communication of 2 hops or more is implemented by the UE-to-UE relay.

<Prior Art Document>

<Patent Document>

Patent Document 1: WO2014/050557

<Summary of the Invention>

<Problems Solved by the Invention>

In a case in which data is relayed by using D2D communication, a plurality of terminal devices that can operate as a relay station may exist between a transmission source and a destination. In this case, one of the plurality of terminal devices operates as a relay station.

However, D2D communication is a new technology, and a relay scheme using D2D communication has not yet been sufficiently considered. As an example, a method for selecting a terminal device that will operate as a relay station from among a plurality of terminal devices has not yet been determined. Therefore, when a terminal device that is not preferable as a relay station is selected as the relay station, the quality of communication between a transmission source and a destination may deteriorate. This problem does not arise only in D2D communication described in the 3GPP Standards (Release 12), but may also arise in a wireless communication system that can perform direct communication between terminal devices.

It is an object in one aspect of the invention to provide a method for appropriately selecting a terminal device that preferably operates as a relay station from among a plurality of terminal devices in a wireless communication system that supports D2D communication.

<Means for Solving the Problem>

According to an aspect of the invention, a wireless communication system includes: a destination device; a source device configured to support device-to-device (D2D) communication and transmits data to the destination device; and a plurality of terminal devices configured to respectively support the D2D communication. The source device transmits a discovery signal to the plurality of terminal devices. Each of the plurality of terminal devices calculates a priority value according to a received power of the discovery signal transmitted from the source device, a received power of a reference signal transmitted from the destination device, a residual amount of its own battery, a number of adjacent D2D nodes or interference received from the adjacent D2D nodes or any combination thereof. Each of the plurality of terminal devices transmits the priority value to the source device. The source device selects a terminal device that will relay data to be transmitted from the source device to the destination device from among the plurality of terminal devices in accordance with the priority value received from one or more terminal devices.

<Effect of the Invention>

According to the aspect described above, in a wireless communication system that supports D2D communication, a terminal device that preferably operates as a relay station is appropriately selected from a plurality of terminal devices.

<Brief Description of Drawings>

FIG. 1 illustrates an example of a wireless communication system.
FIG. 2 illustrates an example of messages used in a procedure for selecting a relay station.
FIG. 3 illustrates an example of a parameter table.
FIG. 4 illustrates an example of a terminal device.
FIG. 5 illustrates an example of a hardware configuration of a terminal device.
FIG. 6 illustrates an example of a base station.
FIG. 7 illustrates an example of a sequence for selecting a relay station according to a first embodiment.
FIG. 8 is a flowchart illustrating an example of the operation of a terminal device that selects a relay station.
FIG. 9 is a flowchart illustrating an example of the operation of a terminal device that may be selected as a relay station.
FIG. 10 is a diagram explaining the grouping of terminal devices.
FIG. 11 illustrates another example of a sequence for selecting a relay station according to the first embodiment.
FIG. 12 illustrates an example of a sequence for selecting a relay station according to a second embodiment.

<Embodiments to Implement the Invention>

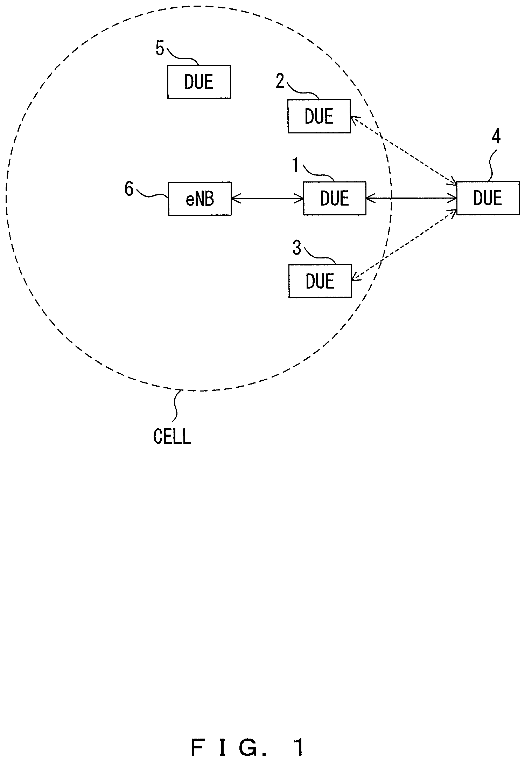

FIG. 1 illustrates an example of a wireless communication system according to embodiments of the invention. In this example, the wireless communication system includes a plurality of terminal devices (device-to-device user equipment (DUE)) 1-5 and a base station 6.
The base station 6 is an evolved Node B (eNB) in this example. The eNB is a base station used in LTE. Accordingly, the base station 6 manages and controls cellular communication according to LTE. Namely, the base station 6 can receive and process a data signal and a control signal in cellular communication that are transmitted from a terminal device. The base station 6 can also transmit a data signal and a control signal in cellular communication to a terminal device.
The base station 6 periodically transmits a broadcast signal. The broadcast signal is received by all of the terminal devices in a cell. In the example illustrated in FIG. 1, each of the terminal devices 1-3 and 5 receives the broadcast signal. A terminal device that has received the broadcast signal can determine that the terminal device itself exists within a cell of the base station 6. The terminal device that has received the broadcast signal may transmit a response signal to the base station 6. In this case, the base station 6 can manage terminal devices that exist within the cell.
Each of the terminal devices 1-5 supports cellular communication and D2D communication. Namely, each of the terminal devices 1-5 can transmit data to another terminal device via the base station 6, and can receive data from another terminal device via the base station 6. In addition, each of the terminal devices 1-5 can perform direct communication with another terminal device via a D2D link rather than via the base station 6. Data carried in cellular communication or D2D communication is not particularly limited, but includes audio data, image data, video data, text data, and the like. In the description below, a terminal device that supports D2D communication may be referred to as a "DUE".
Each of the terminal devices broadcasts a discovery signal in D2D communication periodically for example. The discovery signal is used to report the existence of a terminal device that generates the discovery signal to another terminal device. Accordingly, the discovery signal carries a message including identification information of a source terminal device of the discovery signal. As an example, a discovery signal transmitted from a DUE 4 carries a message including "source ID: DUE 4". A discovery sequence is based on, for example, a physical random access channel (PRACH), a sounding reference signal (SRS), and/or a primary synchronization signal (PSS)/secondary synchronization signal (SSS). In addition, the message of the discovery signal is carried by using, for example, a physical uplink shared channel (PUSCH).

The discovery signal transmitted from DUE 4 is received by a terminal device that is located near DUE 4. In this example, each of DUE 1 to DUE 3 receives the discovery signal transmitted from DUE 4. In this case, DUE 4 can receive a discovery signal that is transmitted from each of DUE 1 to DUE 3.

In the wireless communication system having the configuration above, when DUE 4 performs cellular communication, DUE 4 performs, for example, a cell search in order to detect a base station. However, in the example illustrated in FIG. 1, DUE 4 does not exist within the cell of the base station 6, and therefore DUE 4 fails to detect a base station. In this case, DUE 4 accesses the base station 6 by using D2D communication.

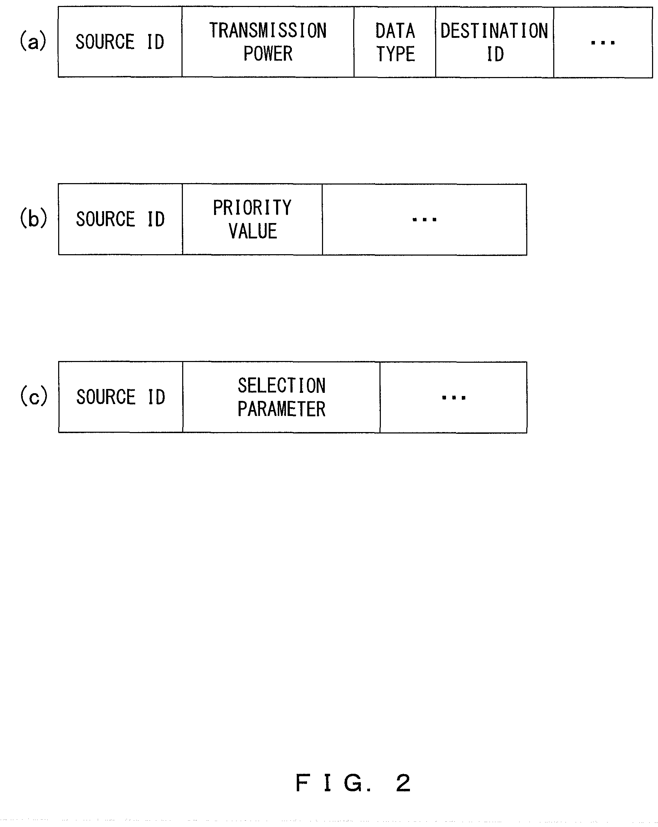

DUE 4 broadcasts a relay station discovery signal with a specified transmission power. The transmission power of the relay station discovery signal may be different for each of the terminal devices in a case in which transmission power information is included in the discovery message, as illustrated in the example of FIG. 2(a). The relay station discovery signal carries a message including identification information of a source terminal device of the relay station discovery signal, similarly to a normal discovery signal. The discovery message carried by the relay station discovery signal includes, for example, a source ID, transmission power information, and data type information, as illustrated in FIG. 2(a). The source ID identifies a transmission source of the relay station discovery signal. The transmission power information indicates the transmission power of the relay station discovery signal. The data type information indicates the type of data that is carried in D2D communication after a D2D link is established. As an example, the data type may indicate whether emergency communication or non-emergency communication. The emergency communication includes, for example, a call for calling the police or a fire station. The data type is specified by a user of a terminal device. The discovery message may include a destination ID. The destination ID identifies a device that is a destination of data.

In this example, the relay station discovery signal transmitted from DUE 4 is received by DUE 1 to DUE 3. Each of DUE 1 to DUE 3 calculates a priority value. The priority value indicates the priority of operating as a relay station, which will be described later in detail. DUE 1 to DUE 3 may calculate the priority value only when data type information included in the received discovery message indicates a specified type (for example, emergency communication).

Each of DUE 1 to DUE 3 transmits the calculated priority value to DUE 4. At this time, each of DUE 1 to DUE 3 transmits the calculated priority value to DUE 4 by using the response message illustrated in FIG. 2(b).

When the relay station discovery signal transmitted from DUE 4 is received by multiple terminal devices, priority values are reported from the multiple terminal devices to DUE 4. In this case, resources for D2D communication may be congested due to a procedure for carrying the priority values. Accordingly, each of the terminal devices that have received the relay station discovery signal (in FIG. 1, DUE 1 to DUE 3) transmits a calculated priority value to DUE 4, only when the calculated priority value is greater than a specified threshold. By employing this method, only a preferable number of terminal devices transmit priority values by appropriately specifying a threshold.

DUE 4 determines a relay station DUE that will operate as a relay station in accordance with the priority values received from one or more terminal devices. At this time, DUE 4 selects a terminal device that has generated the largest priority value as a relay station DUE. In the example illustrated in FIG. 1, DUE 1 is selected from DUE 1 to DUE 3. In this case, a D2D link is established between DUE 4 and DUE 1. In addition, DUE 1 is configured so as to transfer, to the base station 6, data received from DUE 4 via the D2D link. By doing this, D2D communication is performed between DUE 4 and DUE 1, and cellular communication is performed between DUE 1 and the base station 6.

The priority value is calculated according to at least one of the parameters below.

    (1) Reference signal received power (RSRP) on a transmission-source side
    (2) RSRP on a destination side
    (3) Residual amount of a battery
    (4) The number of adjacent DUEs
    (5) Interference

The RSRP on the transmission-source side indicates the received power of a signal transmitted from a transmission source of the relay station discovery signal. The transmission power of the relay station discovery signal is specified in advance, as described above. Alternatively, the transmission power of the relay station discovery signal is reported by using the relay station discovery signal, as illustrated in FIG. 2 (a) . Accordingly, the relay station discovery signal is used as a reference signal in the measurement of the RSRP. In the example illustrated in FIG. 1, each of DUE 1 to DUE 3 measures the received power of the relay station discovery signal transmitted from DUE 4.

The RSRP on the destination side indicates the received power of a signal transmitted from a destination device. The "destination" is, for example, the base station 6. In this case, each of the terminal devices measures, for example, the received power of a broadcast signal transmitted from the base station 6. When the transmission power of the broadcast signal is specified in advance or known, the broadcast signal is used as a reference signal in the measurement of the RSRP. In the example illustrated in FIG. 1, each of DUE 1 to DUE 3 measures the received power of the broadcast signal transmitted from the base station 6.

The residual amount of the battery indicates the residual amount of a battery implemented in a terminal device. In the example illustrated in FIG. 1, each of DUE 1 to DUE 3 monitors the residual amount of its own battery.

The number of adjacent DUEs indicates the number of DUEs that can be accessed by 1 hop. When each of the DUEs periodically broadcasts a discovery signal, each of the DUEs can detect adjacent DUEs. The number of transmission sources of the detected discovery signals corresponds to the number of adjacent DUEs. Assume, for example, that, in the example illustrated in FIG. 1, each of DUE 1 to DUE 4 broadcasts a discovery signal. Also assume that DUE 1 receives the discovery signal from each of DUE 2 to DUE 4. In this case, the "number of adjacent DUEs" of DUE 1 is 3. The DUE is a wireless communication node that supports D2D communication, and therefore the "number of adjacent DUEs" may be referred to as the "number of adjacent D2D nodes".

The interference is not particularly limited, but in this example, the interference is calculated according to the received power and the predicted interference power of a target signal (or according to a ratio of the received power and the predicted interference power of the target signal). As an example, in FIG. 1, assume that DUE 1 receives a target signal from DUE 4. In this case, DUE 1 first calculates the path loss PL (4, 1) between DUE 4 and DUE 1 according to the formula below.

$$PL(4,1) = P0 - Pr(d)$$

P0 indicates the transmission power of the relay station discovery signal. The transmission power of the relay station discovery signal is reported by the relay station discovery message, as illustrated in FIG. 2(a). Pr(d) indicates the received power of the relay station discovery signal at DUE 1. Further, assume that DUE 1 measures in advance a path loss between DUE 1 and an adjacent DUE. In the example illustrated in FIG. 1, DUE 1 measures in advance the path loss PL (2, 1) between DUE 2 and DUE 1 and the path loss PL (3, 1) between DUE 3 and DUE 1. Assume that each of the DUEs can measure or estimate a path loss between an adjacent DUE and the DUE itself by using a periodically broadcast discovery signal.

When the path loss PL (4, 1) is small, the received power of the target signal at DUE 1 is large. In this case, interference with the target signal is likely to be small. When the path loss PL (4, 1) is large, the received power of the target signal at DUE 1 is small. In this case, interference with the target signal is likely to be large. When a path loss (PL (2, 1), PL (3, 1)) between DUE 1 and an adjacent DUE is small, predicted interference power is large in DUE 1. In this case, interference with the target signal is likely to be large. When a path loss between DUE 1 and an adjacent DUE is large, predicted interference power is small in DUE 1. In this case, interference with the target signal is likely to be small. Accordingly, DUE 1 can calculate interference, for example, based on a ratio of a path loss PL between DUE 4 and DUE 1 and a path loss between an adjacent DUE and DUE 1. At this time, interference may be calculated according to a ratio of the path loss PL between DUE 4 and DUE 1 and a minimum value of path losses between adjacent DUEs and DUE 1.

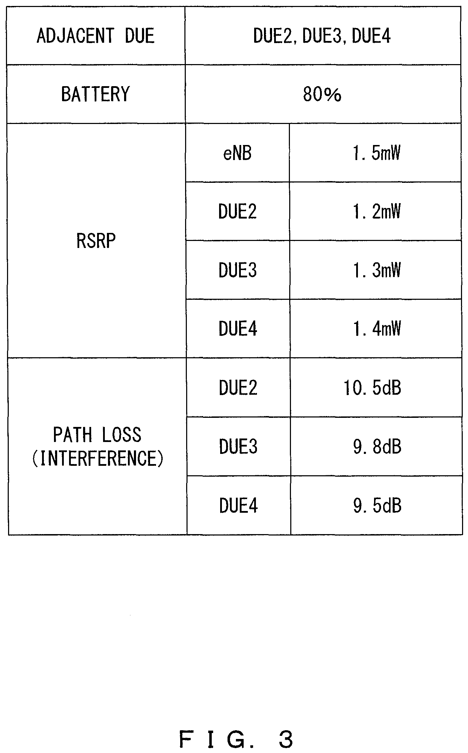

Each of the DUEs may include a parameter table that stores the parameters described above. An example of the parameter table is illustrated in FIG. 3. FIG. 3 illustrates an example of a parameter table provided in DUE 1. In the example illustrated in FIG. 3, DUE 2, DUE 3, and DUE 4 have been detected as an adjacent DUE. The number of adjacent DUEs is 3 in this example. When the number of adjacent DUEs is calculated by using the parameter table, a transmission source (DUE 4) of the relay station discovery signal may be excluded from the detected DUEs (DUE 2 to DUE 4). The path loss is used to calculate interference, as described above. The parameter table is updated, for example, periodically.

Upon receipt of the relay station discovery signal, the terminal device calculates the priority value, as described above. The priority value P is calculated, for example, according to the formula below.

$$P = w1*RSRP(S) + w2*RSRP(D) + w3*BTT - w4*NUM\_DUE - w5*INTER$$

Each of w1-w5 indicates a weight. Each of w1-w5 is zero or a positive value. RSRP(S) indicates the received power of a reference signal received from a source terminal device. RSRP(D) indicates the received power of a reference signal received from a destination device. BTT indicates the residual amount of a battery. NUM_DUE indicates the number of adjacent DUEs. INTER indicates interference.

Weights w1-w5 are determined according to a network policy. As an example, when communication quality is important, w1, w2, and w5 are increased. In order to reduce the concentration of a load on a specified terminal device, w4 may be increased.

The priority value is calculated according to at least one of the parameters described above. Accordingly, as an example, when the priority vale is calculated according to only the RSRP, w1 and w2 are 1, and w3-w5 are zero.

Each of the terminal devices that receives the relay station discovery signal compares the calculated priority value with a specified threshold. When the priority value is greater than the threshold, the terminal device reports the priority value to a source terminal device. The source terminal device determines a relay station DUE that will operate as a relay station in accordance with the priority values received from one or more terminal devices. At this time, DUE 4 may select a terminal device that has generated the largest priority value as a relay station DUE that will operate as a relay station.

The threshold is determined in advance according to, for example, simulation or measurement. The threshold is used to determine whether a DUE can operate as a relay station. As an example, when the threshold is high, only a DUE that can provide a high performance as a relay station transmits a priority value to the source terminal device. In this case, a DUE that will operate as a relay station is selected from one or more DUEs that can provide a high performance as the relay station. Accordingly, communication with a good quality is provided. However, when the threshold is excessively high, candidates for the DUE that will operate as the relay station may fail to be found. On the other hand, when the threshold is excessively low, priority values may be reported from a large number of DUEs to the source terminal device. In this case, D2D communication may be congested due to a procedure for carrying the priority values. Accordingly, the threshold is determined in such a way that the number of priority values received by the source terminal device is close to a specified number (for example, 5) .

In an area in which a density at which DUEs exist is high, the threshold may be increased in comparison with an area in which the density at which DUEs exist is low. In this case, the threshold may be dynamically specified for each of the DUEs by a base station.

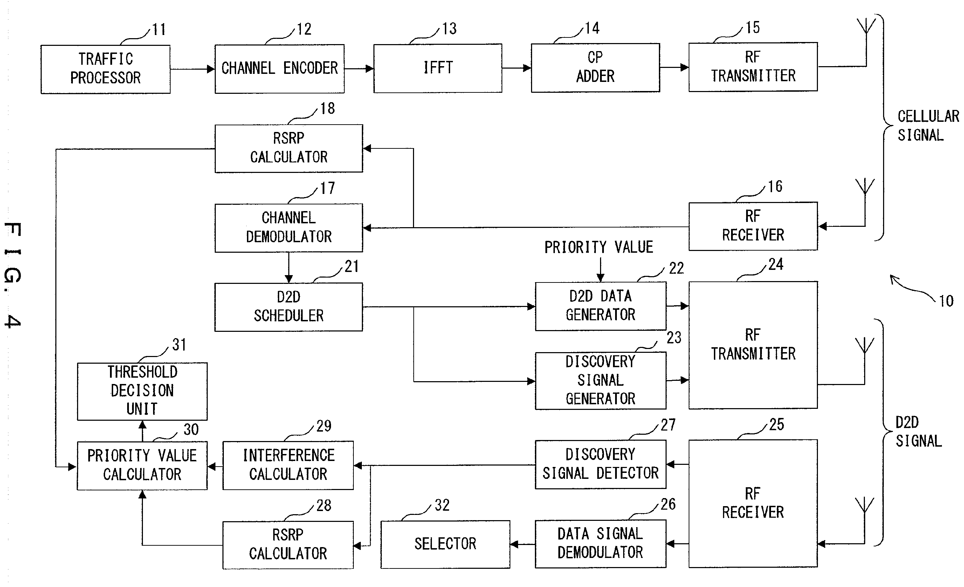

FIG. 4 illustrates an example of the terminal device. A terminal device 10 corresponds to each of DUE 1 to DUE 4 in the example illustrated in FIG. 1. The terminal device 10 supports cellular communication and D2D communication. The terminal device 10 may have other functions that are not illustrated in FIG. 4.

The terminal device 10 includes a traffic processor 11, a channel encoder 12, an IFFT circuit 13, a CP adder 14, an RF transmitter 15, an RF receiver 16, a channel demodulator 17, and an RSRP calculator 18 in order to support cellular communication, as illustrated in FIG. 4.

The traffic processor 11 generates traffic to be transmitted in cellular communication. The channel encoder 12 encodes the traffic output from the traffic processor 11. The IFFT circuit 13 performs inverse Fast Fourier Transform on an output signal of the channel encoder 12 so as to generate a time domain signal. The CP adder 14 adds a cyclic prefix (CP) to the time domain signal output from the IFFT circuit 13. The RF transmitter 15 transmits a cellular signal via an antenna. The cellular signal is received by a base station.

The RF receiver 16 receives a cellular signal transmitted from the base station. The channel demodulator 17 demodulates the received cellular signal. When the received cellular signal includes a D2D resource allocation instruction, the channel demodulator 17 extracts the D2D resource allocation instruction from the received cellular signal, and guides the D2D resource allocation instruction to the D2D scheduler 21 described later. The RSRP calculator 18 calculates the received power of a reference signal (for example, a broadcast signal) that is transmitted from the base station. The received power obtained by the RSRP calculator 18 may be used as an RSRP on a destination side when a priority value is calculated.

The terminal device 10 includes a D2D scheduler 21, a D2D data generator 22, a discovery signal generator 23, an RF transmitter 24, an RF receiver 25, a data signal demodulator 26, a discovery signal detector 27, an RSRP calculator 28, an interference calculator 29, a priority value calculator 30, a threshold decision unit 31, and a selector 32 in order to support D2D communication.

The D2D scheduler 21 can determine a resource used for D2D communication from among resources provided by the wireless communication system or prepared resources. As an example, when a frequency to be used for D2D communication is determined by the D2D scheduler 21, the terminal device 10 performs D2D communication at the frequency. The D2D scheduler 21 can control D2D communication of the terminal device 10 in accordance with the resource allocation instruction received from the base station. As an example, when the frequency of D2D communication is specified by the resource allocation instruction, the D2D scheduler 21 controls the D2D data generator 22 and/or the RF transmitter 24 in such a way that a D2D signal is transmitted at the specified frequency. In addition, the D2D scheduler 21 may control the RF receiver 25 and/or the data signal demodulator 26 in such a way that a D2D signal is received at the specified frequency.

The D2D data generator 22 generates transmission data in D2D communication according to the control of the D2D scheduler 21. The D2D data generator 22 can also generate a response message including the priority value obtained by the priority value calculator 30. The discovery signal generator 23 generates a discovery signal/relay station discovery signal. The discovery signal/relay station discovery signal carries the identification information of the terminal device itself. The discovery signal/relay station discovery signal is transmitted by using, for example, PUSCH. The RF transmitter 24 transmits a D2D signal (including a D2D data signal, a discovery signal, and a relay discovery signal) via an antenna.

The RF receiver 25 receives a D2D signal (including a D2D data signal, a discovery signal, and a relay discovery signal) that is transmitted from another terminal device. The data signal demodulator 26 demodulates the received D2D data signal so as to recover D2D data.

The discovery signal detector 27 detects the discovery signal/relay station discovery signal from the D2D signal transmitted from the other terminal device. At this time, the discovery signal detector 27 obtains the identification information of a terminal device that is a transmission source of the discovery signal/relay station discovery signal. In addition, the discovery signal detector 27 can extract transmission power information and data type information from the relay station discovery signal.

The RSRP calculator 28 calculates the received power of a reference signal (for example, the discovery signal/relay station discovery signal) that is transmitted from another terminal device. The received power obtained by the RSRP calculator 28 may be used to calculate the priority value. The interference calculator 29 calculates interference that a target signal may be subject to in accordance with the received power of the discovery signal/relay station discovery signal. The interference is calculated according to a path loss between terminal devices, as described above.

The priority value calculator 30 calculates the priority value by using at least one of parameters (1) to (5) described above, when the terminal device 10 receives the relay station discovery signal. The RSRP is calculated by the RSRP calculator 18 or 28. The residual amount of a battery is obtained by monitoring a battery that is not illustrated in FIG. 4. The number of adjacent DUEs is obtained by counting the number of terminal devices for which a discovery signal is detected by the discovery signal detector 27. The interference is calculated by the interference calculator 29.

The threshold decision unit 31 decides whether the priority value calculated by the priority value calculator 30 will be transmitted to a source terminal device. Namely, the threshold decision unit 31 decides that the priority value will be transmitted to the source terminal device when the calculated priority value is greater than the threshold, and the threshold decision unit 31 decides that the priority value will not be transmitted to the source terminal device when the calculated priority value is smaller than or equal to the threshold. When it is decided that the priority value will be transmitted to the source terminal device, the priority value calculated by the priority value calculator 30 is transmitted to the source terminal device by using the D2D data generator 22.

The selector 32 selects a DUE that will operate as a relay station (hereinafter referred to as a relay station DUE) in accordance with the priority values received from one or more other terminal devices. As an example, a DUE that has generated the largest priority value is selected as the relay station DUE. Note that the terminal device 10 has a function of establishing a D2D link with the relay station DUE. At this time, in the relay station DUE, a communication circuit is configured in such a way that data received from the terminal device 10 via the D2D link is forwarded to a destination device (in the example illustrated in FIG. 1, the base station 6).

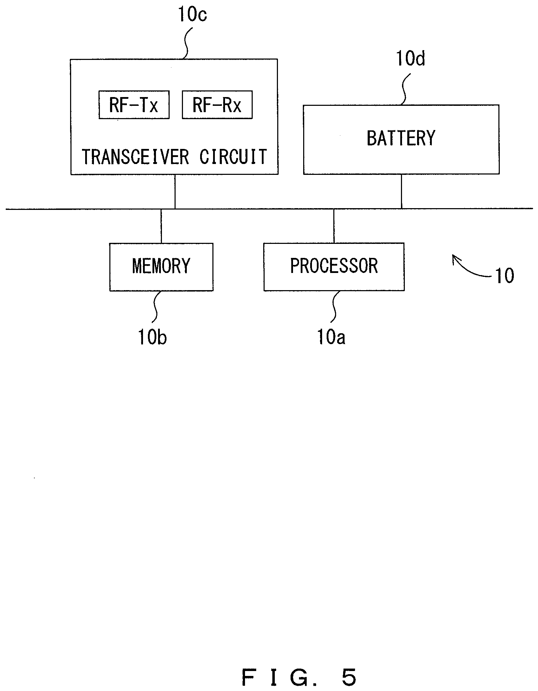

FIG. 5 illustrates an example of a hardware configuration of the terminal device. As illustrated in FIG. 5, the terminal device 10 includes a processor 10a, a memory 10b, a transceiver circuit 10c, and a battery 10d. The terminal device 10 may include other hardware elements.

The processor 10a implements the functions of the terminal device 10 by executing a given program. As an example, the functions of the traffic processor 11, the channel encoder 12, the IFFT circuit 13, the CP adder 14, the channel demodulator 17, the RSRP calculator 18, the D2D scheduler 21, the D2D data generator 22, the discovery signal generator 23, the data signal demodulator 26, the discovery signal detector 27, the RSRP calculator 28, the interference calculator 29, the priority value calculator 30, the threshold decision unit 31, and the selector 32 that are illustrated in FIG. 4 may be implemented by the processor 10a.

The memory 10b stores a program executed by the processor 10a. The memory 10b also stores the parameter table illustrated in FIG. 3. The memory 10b includes a work area of the processor 10a. The transceiver circuit 10c corresponds to the RF transmitter 15, the RF receiver 16, the RF transmitter 24, and the RF receiver 25 that are illustrated in FIG. 4. The battery 10d supplies power to the processor 10a, the memory 10b, and the transceiver circuit 10c. The residual amount of the battery 10d is periodically monitored by the processor 10a (the priority value calculator 30).

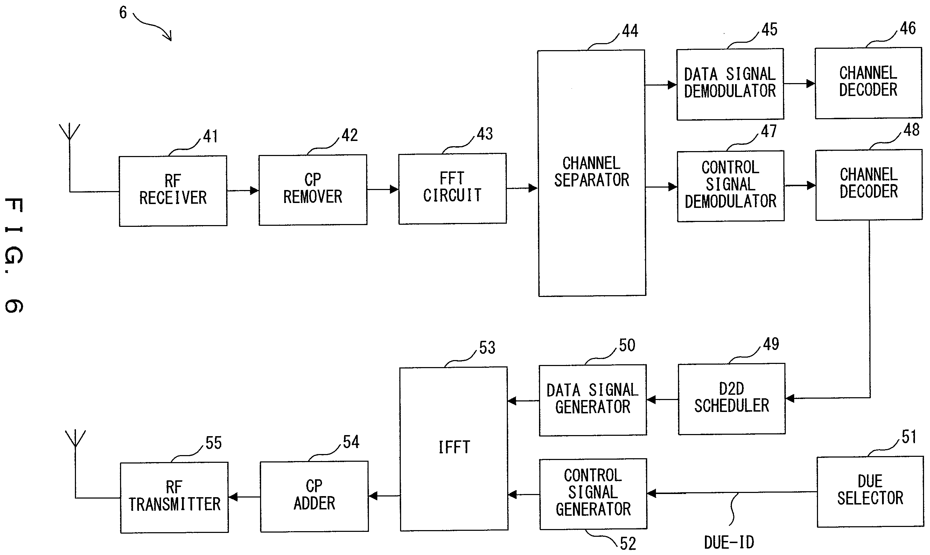

FIG. 6 illustrates an example of the base station. The base station 6 includes an RF receiver 41, a CP remover 42, an FFT circuit 43, a channel separator 44, a data signal demodulator 45, a channel decoder 46, a control signal demodulator 47, a channel decoder 48, a D2D scheduler 49, a data signal generator 50, a DUE selector 51, a control signal generator 52, an IFFT circuit 53, a CP adder 54, and an RF transmitter 55, as illustrated in FIG. 6. The base station 6 may include other functions.

The RF receiver 41 receives a cellular signal transmitted from the terminal device 10. The CP remover 42 removes a cyclic prefix from the received cellular signal. The FFT circuit 43 performs Fast Fourier Transform on the received signal so as to generate a frequency domain signal. The channel separator 44 separates the received signal into a data signal and a control signal in a frequency domain.

The data signal demodulator 45 demodulates the received data signal so as to recover data. The channel decoder 46 decodes the recovered data. The control signal demodulator 47 demodulates the received control signal. The channel decoder 48 decodes the demodulated control signal so as to recover control information.

The D2D scheduler 49 generates a resource allocation instruction of D2D communication by using the control information recovered by the channel decoder 48. The data signal generator 50 generates a data signal to be transmitted to the terminal device 10. The DUE selector 51 specifies one or more candidates for a terminal device that will operate as a relay station from among terminal devices that exist within a cell. The DUE selector 51 outputs identification information for identifying the specified terminal device. The control signal generator 52 generates a control signal that controls the terminal device 10. The resource allocation instruction generated by the D2D scheduler 49 is transmitted to the terminal device 10 by the data signal generator 50 or the control signal generator 52. The identification information indicating the terminal device selected by the DUE selector 51 is transmitted to the terminal device 10 by the control signal generator 52.

The IFFT circuit 53 performs inverse Fast Fourier Transform on the control signal and the data signal so as to generate a time domain signal. The CP adder 54 adds a cyclic prefix to the time domain signal output from the IFFT circuit 53. The RF transmitter 55 transmits a cellular signal via an antenna.

<First Embodiment>

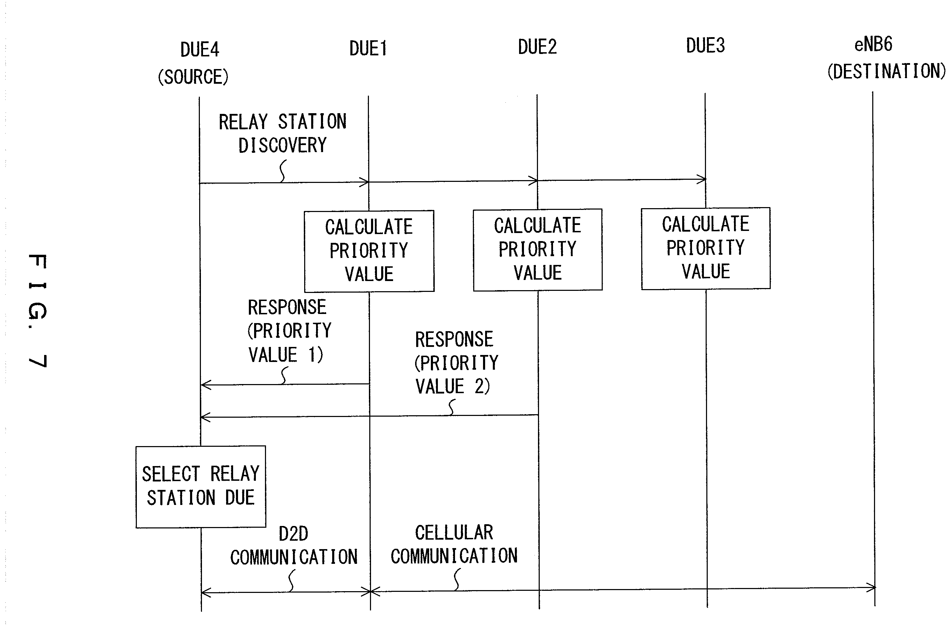

FIG. 7 illustrates an example of a sequence for selecting a relay station according to a first embodiment. In this example, assume that DUE 4 accesses the base station 6. Namely, DUE 4 is a source terminal device, and the base station 6 is a destination device. However, DUE 4 is located outside the cell of the base station 6, as illustrated in FIG. 1, and thus fails to directly access the base station 6. Stated another way, DUE 4 fails to detect the base station 6 when a cell search is performed. Accordingly, DUE 4 selects a DUE that will operate as a relay station between DUE 4 and the base station 6.

DUE 4 broadcasts a relay station discovery signal. The relay station discovery signal carries a discovery message including "source ID: DUE 4" "transmission power" and "data type: emergency". The relay station discovery signal is received by each of DUE 1 to DUE 3. The relay station discovery signal may include a destination ID that specifies a "base station" in order to indicate the UE-to-network relay. When the relay station discovery signal does not include the destination ID, each of the DUEs may be configured to recognize that the relay station discovery signal is requesting the UE-to-network relay as a default. In these cases, each of the DUEs that have received the relay station discovery recognizes the nearest base station as a destination.

When each of DUE 1 to DUE 3 detects that a data type reported by the discovery message is "emergency", each of DUE 1 to DUE 3 starts a process for calculating a priority value. The priority value is calculated by using at least one of an RSRP on a transmission-source side, an RSRP on a destination side, the residual amount of a battery, the number of adjacent DUEs, and interference, as described above. It is preferable that the priority value be calculated by using at least the RSRP on the transmission-source side and the RSRP on the destination side.

Each of DUE 1 to DUE 3 compares the calculated priority value with a specified threshold. When the calculated priority value is greater than the threshold, the DUE transmits the priority value to DUE 4. In the example illustrated in FIG. 7, the priority values calculated by DUE 1 and DUE 2 are respectively greater than the threshold, and the priority value calculated by DUE 3 is smaller than the threshold. Accordingly, each of DUE 1 and DUE 2 transmits the priority value calculated by the local device to DUE 4. Stated another way, priority value 1 is reported from DUE 1 to DUE 4, and priority value 2 is reported from DUE 2 to DUE 4.

DUE 4 selects a DUE that will operate as a relay station in accordance with the priority value received from each of one or more DUEs. In this example, DUE 4 receives priority value 1 from DUE 1, and receives priority value 2 from DUE 2. Assume that priority value 1 is greater than priority value 2. In this case, DUE 4 selects DUE 1 as a relay station DUE.

DUE 4 establishes a D2D link with DUE 1. At this time, a communication circuit is configured in such a way that DUE 1 forwards, to the base station 6, data received from DUE 4 via the D2D link. By doing this, data to be transmitted from DUE 4 to the base station 6 is relayed by DUE 1, and is forwarded to the base station 6. At this time, D2D communication is performed between DUE 4 and DUE 1 via the D2D link, and cellular communication is performed between DUE 1 and the base station 6.

As described above, according to the first embodiment, when a terminal device fails to perform direct communication with a destination device, a relay station DUE that will operate as a relay station is selected from a plurality of DUEs. At this time, the relay station DUE is selected in consideration of the communication environment and the operation state of each of the DUEs, and therefore the quality of communication between the terminal device and the destination device is good. The relay station DUE is selected according to priority values generated by the respective DUEs. At this time, only a priority value that is greater than a specified threshold is transmitted from a corresponding DUE to the terminal device. Accordingly, traffic for reporting the priority values is reduced.

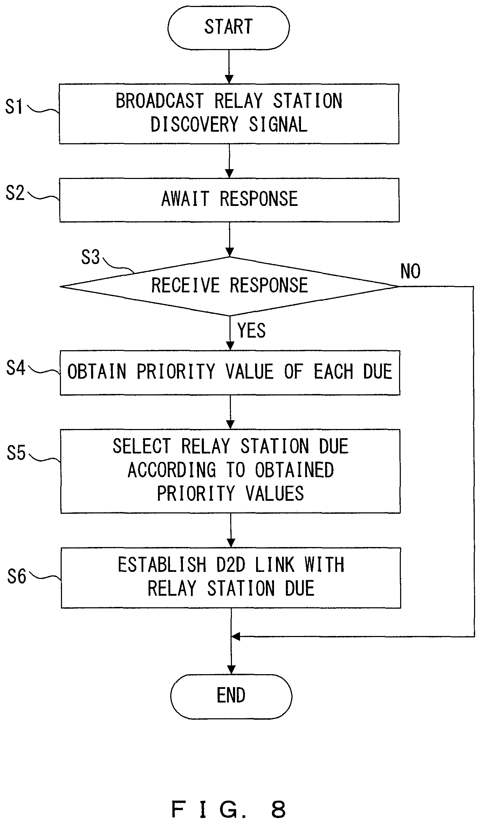

FIG. 8 is a flowchart illustrating the processing of a terminal device that selects a relay station. The processing of this flowchart is performed, for example, by DUE 4 illustrated in FIG. 1 or FIG. 7. In addition, the processing of this flowchart is performed by the processor 10a of the terminal device that selects the relay station. Further, the processing of this flowchart is performed, for example, when the terminal device fails to detect a base station in a cell search.

In S1, the terminal device broadcasts a relay station discovery signal. In S2 and S3, the terminal device awaits a response message that corresponds to the relay station discovery signal. Upon receipt of a response message from one or more DUEs, the processing of the terminal device moves on to S4. When the terminal device does not receive the response message within a specified time period after the relay station discovery signal is transmitted, it is determined that the terminal device is isolated. In this case, the processing of the terminal device is terminated.

In S4, the terminal device obtains a priority value from the received response message. Namely, the terminal device obtains a priority value generated by each of the DUEs. In S5, the terminal device selects a relay station DUE according to the obtained priority values. The terminal device transmits, to the relay station DUE, a message indicating an instruction to operate as a relay station, and establishes a D2D link with the relay station DUE.

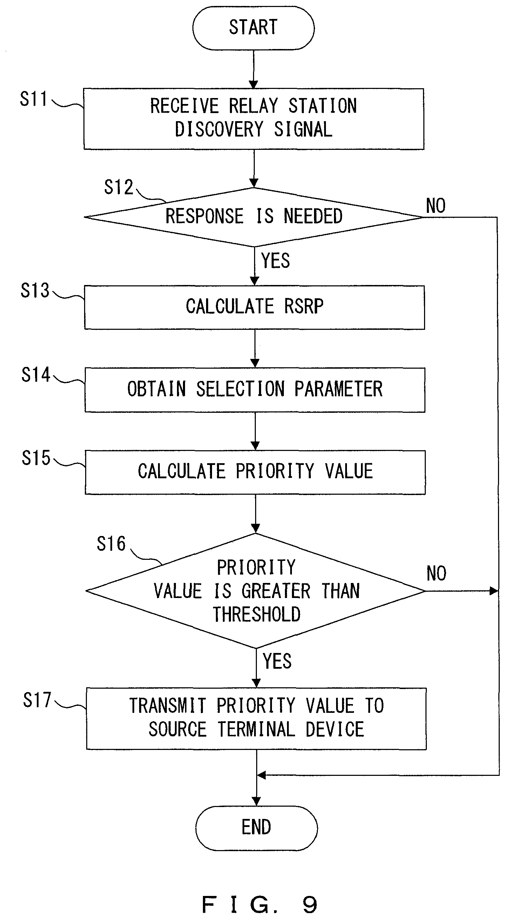

FIG. 9 is a flowchart illustrating the processing of a DUE that may be selected as the relay station. The processing of this flowchart is performed, for example, by DUE 1 to DUE 3 illustrated in FIG. 1 or FIG. 7. In addition, the processing of this flowchart is performed by the processor 10a of the DUE.

In S11, the DUE receives a relay station discovery signal from a source terminal device. In S12, the DUE refers to a data type in a discovery message, and decides whether the DUE will respond to the relay station discovery signal. As an example, when the data type is "emergency", the DUE decides that the DUE will respond to the relay station discovery signal.

In S13, the DUE calculates the received power of the relay station discovery signal. The received power is stored as an RSRP on a transmission-source side in a parameter table. In S14, the DUE obtains other selection parameters (such as an RSRP on a destination side, the residual amount of a battery, the number of adjacent DUEs, and/or interference). As an example, the selection parameters are measured in advance, and are stored in the parameter table illustrated in FIG. 3. The DUE may measure each of the selection parameters upon receipt of the relay station discovery signal.

In S15, the DUE calculates a priority value according to the selection parameters (including the RSRP on the transmission-source side). In S16, the DUE compares the priority value obtained in S15 with a threshold. When the priority value is greater than the threshold, the DUE generates a response message including the priority value, and transmits the response message to the source terminal device in S17. When the priority value is smaller than or equal to the threshold, the DUE does not respond to the relay station discovery signal.

In the example described above, the destination device is a base station device, but the invention is not limited to this form. Namely, the destination device may be a terminal device (herein, a DUE). As an example, in FIG. 1, assume that DUE 4 desires to access DUE 5, but that a wireless signal transmitted from DUE 4 does not reach DUE 5. According to the first embodiment, also in this case, a DUE that will operate as a relay station is selected from DUE 1 to DUE 3.

When the destination device is a DUE, the source terminal device may broadcast a discovery message including a destination ID by using a relay station discovery signal. In this case, a DUE that has received the relay station discovery signal can specify a destination device, and therefore the DUE can obtain the RSRP on the destination side. Stated another way, the DUE that has received the relay station discovery signal can calculate a priority value by using a method similar to the method in a case in which the destination is a base station. Therefore, according to the first embodiment, even when the destination device is a DUE, a DUE that preferably operates as a relay station is selected, and a relay operation is provided by the selected DUE.

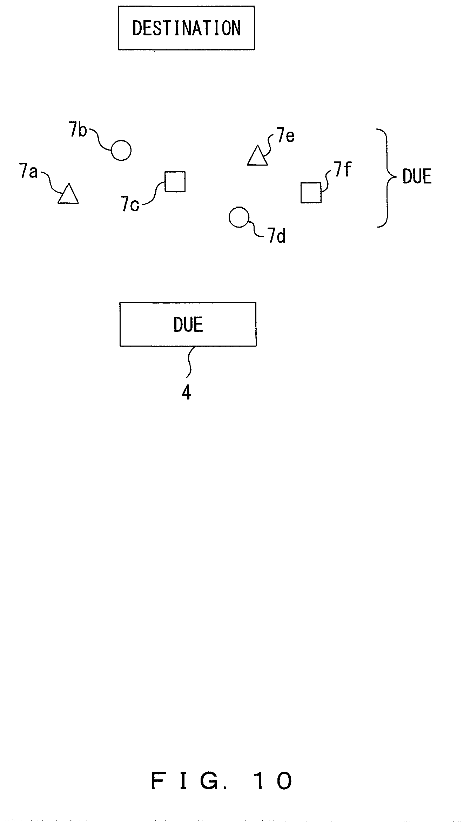

The terminal devices that may operate as a relay station may be grouped. In the example illustrated in FIG. 10, DUE 7a and DUE 7b belong to a first group, DUE 7b and DUE 7d belong to a second group, and DUE 7c and DUE 7f belong to a third group. DUE 7a and DUE 7e that belong to the first group calculate priority values, and transmit the priority values to a source terminal device (DUE 4), only when DUE 7a and DUE 7e receive a relay station discovery signal that specifies a data type (for example, a report to the police) that corresponds to the first group. DUE 7b and DUE 7d that belong to the second group calculate priority values, and transmit the priority values to the source terminal device (DUE 4), only when DUE 7b and DUE 7d receive a relay station discovery signal that specifies a data type (for example, a report to the fire station) that corresponds to the second group. In this case, a threshold for deciding whether the priority value will be transmitted may be different for each group.

In the example described above, a source terminal device selects a relay station DUE according to priority values calculated by respective DUEs, but the invention is not limited to this method. As an example, a base station may select the relay station DUE according the priority values calculated by the respective DUEs.

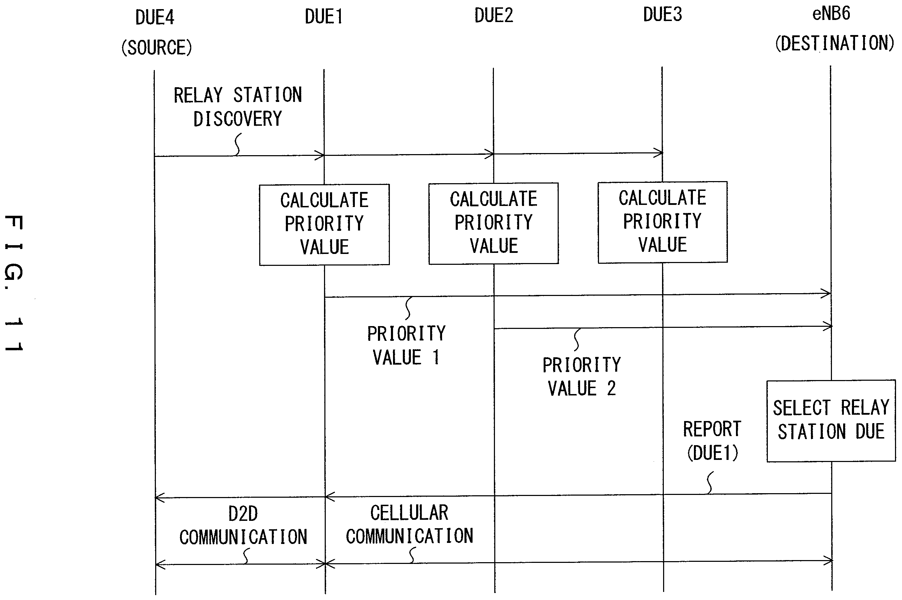

FIG. 11 illustrates an example of a sequence in which a base station selects a relay station. A procedure in which a source terminal device broadcasts a relay station discovery signal and a procedure in which a DUE that has received the relay station discovery signal calculates a priority value are substantially the same in FIG. 7 and FIG. 11.

In the example illustrated in FIG. 11, DUE 1 and DUE 2 respectively transmit priority value 1 and priority value 2 to the base station 6. The base station 6 selects a DUE that will operate as a relay station in accordance with the received priority values. In this example, DUE 1 is selected as the relay station DUE. Then, the base station 6 transmits, to DUE 1, a message indicating that DUE 1 has been selected as the relay station DUE, and DUE 1 forwards this message to the source terminal device (in this example, DUE 4). Then, similarly to the example illustrated in FIG. 7, DUE 1 relays communication between DUE 4 and the base station 6.

<Second Embodiment>

In the first embodiment, when a source terminal device broadcasts a relay station discovery signal, a procedure for selecting a DUE that will operate as a relay station is started. In a second embodiment, a DUE that desires to operate as a relay station broadcasts a transmission source discovery signal. Whether a DUE desires to operate as a relay station is specified, for example, by a user of the DUE. A DUE that is specified by the base station may broadcast the transmission source discovery signal. The transmission source discovery signal may be broadcast periodically.

The transmission source discovery signal includes the "source ID" and the "selection parameter", as illustrated in FIG. 2(c). The source ID identifies a transmission source of the transmission source discovery signal. The selection parameter includes an RSRP on a destination side, the residual amount of a battery, and the number of adjacent DUEs. In this example, the destination device is the base station 6 illustrated in FIG. 1. In this case, the RSRP on the destination side indicates the received power of a reference signal (such as a broadcast signal) that is transmitted from the base station 6. The residual amount of the battery and the number of adjacent DUEs are the same in the first embodiment and the second embodiment. It is preferable that the transmission power of the transmission source discovery signal be specified in advance. As an example, the transmission power of the transmission source discovery signal may be the same as a normal discovery signal or the relay station discovery signal described above.

The source terminal device performs a cell search when communication is performed with another terminal device via the base station 6. When the cell search has failed, the source terminal device selects a DUE that will operate as a relay station by using a transmission source discovery signal received from each of one or more DUEs. At this time, the source terminal device calculates a corresponding priority value according to the received power of the transmission source discovery signal and the selection parameter carried by the transmission source discovery signal. The source terminal device selects a DUE that will operate as a relay station in accordance with the priority value calculated for each of the one or more DUEs.

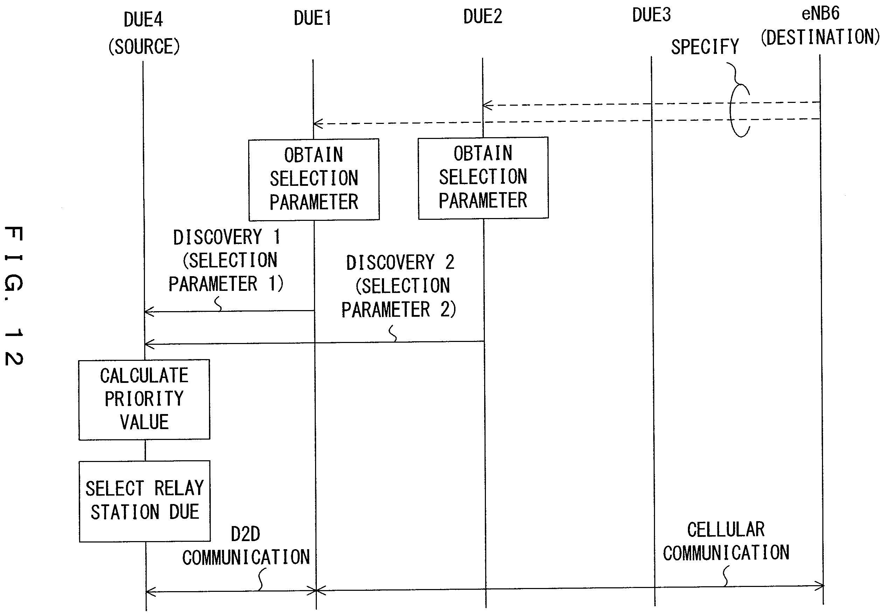

FIG. 12 illustrates an example of a sequence for selecting a relay station according to the second embodiment. In this example, DUE 4 accesses the base station 6, similarly to the sequence illustrated in FIG. 7. Namely, DUE 4 is a source terminal device, and the base station 6 is a destination device. Also assume that DUE 4 fails to detect the base station 6 when a cell search is performed.

From among DUE 1 to DUE 4, DUE 1 and DUE 2 periodically broadcast a transmission source discovery signal. Namely, DUE 1 and DUE 2 are configured to be selectable as a relay station by a user. Alternatively, DUE 1 and DUE 2 are specified to be DUEs that may be selected as the relay station by the base station 6.

The transmission source discovery signal carries a discovery message including the selection parameter, as illustrated in FIG. 2(c). The selection parameter includes an RSRP on a destination side, the residual amount of a battery, and the number of adjacent DUEs, as described above. As an example, the selection parameter collected by DUE 1 includes the received power of a broadcast signal transmitted from the base station 6, the residual amount of a battery of DUE 1, and the number of D2D nodes that are adjacent to DUE 1. It is assumed that the selection parameter of each of the DUEs is stored in the parameter table illustrated in FIG. 3, as described above.

DUE 4 awaits a transmission source discovery signal that is broadcast by another DUE. In this example, DUE 4 receives transmission source discovery signal 1 including selection parameter 1 from DUE 1, and receives transmission source discovery signal 2 including selection parameter 2 from DUE 2. Then, DUE 4 calculates respective priority values for DUE 1 and DUE 2.

Specifically, DUE 4 calculates the received power of transmission source discovery signal 1 transmitted from DUE 1. Here, the loss of a path from DUE 1 to DUE 4 is almost the same as the loss of a path from DUE 4 to DUE 1. Accordingly, the received power of transmission source discovery signal 1 at DUE 4 is equivalent to an RSRP at. DUE 1 at the time when a reference signal is transmitted from DUE 4 to DUE 1. Namely, the received power of transmission source discovery signal 1 at DUE 4 is equivalent to an RSRP on a transmission-source side at DUE 1 at the time when data is transmitted from DUE 4 via DUE 1 to the base station 6.

DUE 4 calculates the priority value of DUE 1 by using the received power of transmission source discovery signal 1 transmitted from DUE 1 (namely, an RSRP on a transmission-source side), and an RSRP on a destination side, the residual amount of a battery, and the number of adjacent DUEs that are included in selection parameter 1 received from DUE 1. Similarly, DUE 4 calculates the priority value of DUE 2 by using the received power of transmission source discovery signal 2 transmitted from DUE 2, and selection parameter 2.

A method for selecting a DUE that will operate as a relay station according to a priority value and a method for establishing a link by using the selected DUE are substantially the same in the first embodiment and the second embodiment. Accordingly, similarly to the example illustrated in FIG. 7, also in the sequence illustrated in FIG. 12, a D2D link is established between DUE 4 and DUE 1. In addition, a communication circuit is configured in such a way that DUE 1 forwards, to the base station 6, data received from DUE 4 via the D2D link. By doing this, data to be transmitted from DUE 4 to the base station 6 is relayed by DUE 1, and is forwarded to the base station 6.

**Claims**

1. A wireless communication system comprising:

   a destination device;
   a source device configured to support device-to-device (D2D) communication and transmits data to the destination device; and
   a plurality of terminal devices configured to respectively support the D2D communication, wherein
   the source device transmits a discovery signal to the plurality of terminal devices,
   each of the plurality of terminal devices calculates a priority value according to a received power of the discovery signal transmitted from the source device, a received power of a reference signal transmitted from the destination device, a residual amount of its own battery, a number of adjacent D2D nodes or interference received from the adjacent D2D nodes or any combination thereof,
   each of the plurality of terminal devices transmits the priority value to the source device, and
   the source device selects a terminal device that will relay data to be transmitted from the source device to the destination device from among the plurality of terminal devices in accordance with the priority value received from one or more terminal devices.

2. The wireless communication system according to claim 1, wherein
   each of the plurality of terminal devices transmits the priority value to the source device, when the priority value is greater than a threshold.

3. The wireless communication system according to claim 1, wherein
   the discovery signal carries data type information indicating a type of the data to be transmitted from the source device to the destination device, and
   each of the plurality of terminal devices decides whether the priority value will be calculated in accordance with the data type information.

4. The wireless communication system according to claim 1, wherein
   the source device transmits data to the selected terminal device by using the D2D communication, and
   the selected terminal device forwards the data received from the source device to the destination device.

5. The wireless communication system according to claim 1, wherein
   the destination device is a base station that provides cellular communication, and
   the source device transmits the discovery signal to the plurality of terminal devices and selects a terminal device that will relay the data from among the plurality of terminal devices, when the source device fails to detect the destination device in a cell search.

6. A wireless communication method used in a wireless communication system that includes a destination device, a source device that supports device-to-device (D2D) communication and transmits data to the destination device and a plurality of terminal devices that respectively support the D2D communication, the wireless communication method comprising:

   transmitting, by the source device, a discovery signal to the plurality of terminal devices;
   calculating, by each of the plurality of terminal devices, a priority value according to a received power of the discovery signal transmitted from the source device, a received power of a reference signal transmitted from the destination device, a residual amount of its own battery, a number of adjacent D2D nodes or interference received from the adjacent D2D nodes or any combination thereof;
   transmitting, by each of the plurality of terminal devices, the priority value to the source device; and
   selecting, by the source device, a terminal device that will relay data to be transmitted from the source device to the destination device from among the plurality of terminal devices in accordance with the priority value received from one or more terminal devices.

7. The wireless communication method according to claim 6, wherein
   each of the plurality of terminal devices transmits the priority value to the source device, when the priority value is greater than a threshold.

8. A wireless communication device used in a wireless communication system that includes a destination device, and a source device that supports device-to-device (D2D) communication and transmits data to the destination device, the wireless communication device comprising:

a priority value calculator configured to calculate a priority value according to a received power of a discovery signal broadcast from the source device, a received power of a reference signal transmitted from the destination device, a residual amount of its own battery, a number of adjacent D2D nodes or interference received from the adjacent D2D nodes or any combination thereof, the priority value being used as an index for selecting a terminal device that will relay data to be transmitted from the source device to the destination device; and

a transmitter configured to transmit the priority value to the source device.

9. The wireless communication device according to claim 8, further comprising:

a threshold decision unit configured to compare the priority value calculated by the priority value calculator with a threshold, wherein

the transmitter transmits the priority value to the source device, when the priority value is greater than the threshold.

10. A wireless communication system comprising:

a source device configured to support device-to-device (D2D) communication;

a plurality of terminal devices configured to respectively support the D2D communication and cellular communication; and

a base station configured to support the cellular communication, wherein

the source device transmits a discovery signal to the plurality of terminal devices,

each of the plurality of terminal devices calculates a priority value according to a received power of the discovery signal transmitted from the source device, a received power of a reference signal transmitted from the base station, a residual amount of its own battery, a number of adjacent D2D nodes or interference received from the adjacent D2D nodes or any combination thereof,

each of the plurality of terminal devices transmits the priority value to the base station, when the priority value is greater than a threshold, and

the base station selects a terminal device that will relay data to be transmitted from the source device to the base station from among the plurality of terminal devices in accordance with the priority value received from one or more terminal devices.

11. A wireless communication system comprising:

a destination device;

a source device configured to support device-to-device (D2D) communication and transmits data to the destination device; and

a plurality of terminal devices configured to respectively support the D2D communication, wherein

each of the plurality of terminal devices transmits, to the source device, parameter information including a received power of a reference signal transmitted from the destination device, a residual amount of its own battery or a number of adjacent D2D nodes or any combination thereof, by using a discovery signal,

the source device calculates a priority value for each of the plurality of terminal devices in accordance with the received power of the discovery signal transmitted from corresponding terminal device and the parameter information received from the corresponding terminal device, and

the source device selects a terminal device that will relay data to be transmitted from the source device to the destination device from among the plurality of terminal devices in accordance with the priority value calculated for each of the plurality of terminal devices.

12. A wireless communication method used in a wireless communication system that includes a destination device, a source device that supports device-to-device (D2D) communication and transmits data to the destination device and a plurality of terminal devices that respectively support the D2D communication, the wireless communication method comprising:

calculating, by the source device, a priority value for each of the plurality of terminal devices in accordance with a received power of a discovery signal transmitted from a terminal device and parameter information received from the terminal device, and

selecting, by the source device, a terminal device that will relay data to be transmitted from the source device to the destination device from among the plurality of terminal devices in accordance with the priority value calculated for each of the plurality of terminal devices.

F I G. 1

(a)

| SOURCE ID | TRANSMISSION POWER | DATA TYPE | DESTINATION ID | ... |
|-----------|--------------------|-----------|----------------|-----|

(b)

| SOURCE ID | PRIORITY VALUE | ... |
|-----------|----------------|-----|

(c)

| SOURCE ID | SELECTION PARAMETER | ... |
|-----------|---------------------|-----|

F I G.  2

| ADJACENT DUE | DUE2, DUE3, DUE4 | |
|---|---|---|
| BATTERY | 80% | |
| RSRP | eNB | 1. 5mW |
| | DUE2 | 1. 2mW |
| | DUE3 | 1. 3mW |
| | DUE4 | 1. 4mW |
| PATH LOSS (INTERFERENCE) | DUE2 | 10. 5dB |
| | DUE3 | 9. 8dB |
| | DUE4 | 9. 5dB |

F I G. 3

F I G. 4

F I G. 5

F I G. 6

F I G. 7

DUE4 (SOURCE)    DUE1    DUE2    DUE3    eNB6 (DESTINATION)

RELAY STATION DISCOVERY

CALCULATE PRIORITY VALUE

CALCULATE PRIORITY VALUE

CALCULATE PRIORITY VALUE

RESPONSE (PRIORITY VALUE 1)

RESPONSE (PRIORITY VALUE 2)

SELECT RELAY STATION DUE

D2D COMMUNICATION

CELLULAR COMMUNICATION

EP 3 297 331 A1

START

S1 — BROADCAST RELAY STATION
DISCOVERY SIGNAL

S2 — AWAIT RESPONSE

S3 — RECEIVE RESPONSE — NO

YES

S4 — OBTAIN PRIORITY VALUE OF EACH DUE

S5 — SELECT RELAY STATION DUE
ACCORDING TO OBTAINED
PRIORITY VALUES

S6 — ESTABLISH D2D LINK WITH
RELAY STATION DUE

END

F I G.  8

START

S11 — RECEIVE RELAY STATION
DISCOVERY SIGNAL

S12 — RESPONSE IS NEEDED — NO

YES

S13 — CALCULATE RSRP

S14 — OBTAIN SELECTION PARAMETER

S15 — CALCULATE PRIORITY VALUE

S16 — PRIORITY
VALUE IS GREATER THAN
THRESHOLD — NO

YES

S17 — TRANSMIT PRIORITY VALUE TO
SOURCE TERMINAL DEVICE

END

F I G. 9

DESTINATION

7b ○

7a △

7c □

7e △

7f □  } DUE

○ 7d

DUE

4

F I G.  1 0

F I G. 1 1

eNB6
(DESTINATION)

DUE3

DUE2

DUE1

DUE4
(SOURCE)

SPECIFY

OBTAIN SELECTION PARAMETER

OBTAIN SELECTION PARAMETER

DISCOVERY 2 (SELECTION PARAMETER 2)

DISCOVERY 1 (SELECTION PARAMETER 1)

CALCULATE PRIORITY VALUE

SELECT RELAY STATION DUE

CELLULAR COMMUNICATION

D2D COMMUNICATION

F I G.  1 2

**INTERNATIONAL SEARCH REPORT**

| International application No. |
| --- |
| PCT/JP2015/063883 |

A. CLASSIFICATION OF SUBJECT MATTER
*H04W40/02*(2009.01)i, *H04W84/18*(2009.01)i, *H04W92/18*(2009.01)i

According to International Patent Classification (IPC) or to both national classification and IPC

B. FIELDS SEARCHED

Minimum documentation searched (classification system followed by classification symbols)
H04W4/00-99/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2015/046264 A1  (Kyocera Corp.),<br>02 April 2015 (02.04.2015),<br>paragraphs [0038] to [0122]; fig. 7, 8<br>(Family: none) | 1,4,6,8<br>5,11-12<br>2-3,7,9-10 |
| Y<br>A | Samsung, Issues to support UE2NW relay UE in<br>D2D communication, 3GPP TSG-RAN WG2 #89bis R2-<br>151290, 2015.04.10 | 5<br>1-4,6-12 |
| Y<br>A | Coolpad, Considerations D2D Synchronization,<br>3GPP TSG-RAN WG1 #76b R1-141721, 2014.03.27 | 11-12<br>1-10 |
| A | CATT, Discussion on D2D synchronization sources,<br>3GPP TSG-RAN WG1#78 R1-142894, 2014.08.10 | 1-12 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    10 June 2015 (10.06.15) | Date of mailing of the international search report<br>    23 June 2015 (23.06.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

**INTERNATIONAL SEARCH REPORT**

International application No.

PCT/JP2015/063883

C (Continuation).   DOCUMENTS CONSIDERED TO BE RELEVANT

| Category* | Citation of document, with indication, where appropriate, of the relevant passages | Relevant to claim No. |
|---|---|---|
| A | Samsung, Resource allocation for synchronization signal to assist D2D, 3GPP TSG-RAN WG1#78 R1-143097, 2014.08.10 | 1-12 |
| A | WO 2014/068170 A1 (Nokia Corp.), 08 May 2014 (08.05.2014), entire text; all drawings (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2014050557 A